# EUROPEAN PATENT SPECIFICATION

(11) **EP 3 718 932 B1**
(45) Date of publication and mention of the grant of the patent: **29.05.2024**
(21) Application number: 20167475.1
(22) Date of filing: 01.04.2020
(51) Int. Cl.: B07C 3/02, B07C 5/36, B65G 47/80, B65G 29/00

(54) **SORTING MACHINE FOR OBJECTS**
SORTIERMASCHINE FÜR OBJEKTE
MACHINE DE TRI D'OBJETS

(30) Priority: 05.04.2019 IT 201900005210
(43) Date of publication of application: 07.10.2020
(73) Proprietor: Fives Intralogistics S.p.A., 21015 Lonate Pozzolo (VA) (IT)
(72) Inventor: MACCHI, Riccardo, 21017 Samarate (IT)
(74) Representative: Gagliardelli, Fabrizio

(56) References cited:
- EP-A1- 3 336 021
- EP-A2- 0 613 730
- WO-A1-2011/093730
- DE-A1- 10 119 679
- JP-A- 2001 163 429
- US-A1- 2002 112 996

## Description

The present invention relates to the technical field of plants for storing/sorting objects, in particular packages.

In particular, the present invention relates to a sorting machine for objects and a relative method for sorting objects.

In the transport and logistics sector, package and other object sorting systems are of particular importance.

Traditionally, such systems comprise a main conveyor line that receives the packages and objects to be sorted and distributes them to several secondary lines that receive the packages from the main line and convey them to their predetermined distribution stations.

Unfortunately, these sorting systems are very cumbersome due to the space occupied by the linear conveyors and the fact that the outfeed stations can be distributed at the external perimeter of the plant.

In addition, this system has several bottlenecks represented by the maximum capacity of the individual lines, and in particular the main conveyor line, which can slow down and even jam the sorting of packages. A further disadvantage of the known plants is the low scalability of the plants, which requires the replacement of entire conveyor lines to change their sorting capacity.

EP0613730 discloses a sorting device according to the preamble of claim 1 with a transport device for displacing objects such as, for example, postal items from an input station to an output position. The transport device comprises a field of individual transport units arranged in a hexagonal grid shape and each provided with a transport mechanism arranged on a rotatable support. The output positions are positioned alongside the field, while the field is accessible through at least two separate input positions.

In this context, the technical task underpinning the present invention is to provide a sorting machine for objects and a relative method for sorting objects which overcome at least some of the drawbacks of the prior art cited above.

In particular, an object of the present invention is to provide a sorting machine for objects and a relative method for sorting objects capable of reducing the overall dimensions, with the same sorting capacity, compared to the known plants.

A further object of the present invention is to propose a sorting machine for objects and a relative method for sorting objects capable of removing throttling and/or bottlenecks along the sorting path.

Another object of the present invention is to propose a sorting machine for objects and a relative method for sorting objects that can be easily scaled in relation to the capacity and desired size and the dimensions allowed. The stated technical task and specified objects are substantially achieved by a sorting machine for objects according to claim 1 and a relative method for sorting objects according to claim 14.

The dependent claims correspond to possible embodiments of the invention.

Additional features and advantages of the present invention will become more apparent from the approximate, and hence non-limiting, description of a preferred but not exclusive embodiment of a sorting machine for objects and a relative method for sorting objects.

This description will be set out below with reference to the appended drawings, which are provided solely for indicative and therefore non-limiting purposes, in which:
- figure 1 is a view from above of a sorting machine for objects according to the present invention;
- figure 2 is a detail of figure 1;
- figure 3 is a perspective view of a sorting machine for objects in an operating configuration according to the present invention;
- figure 4 is a perspective view of a sorting machine according to a further embodiment.

With reference to the accompanying figures, a sorting machine for objects, which is an object of the present invention, is generally indicated with the reference number 1. It will be referred to below with the abbreviated notation "sorting machine 1".

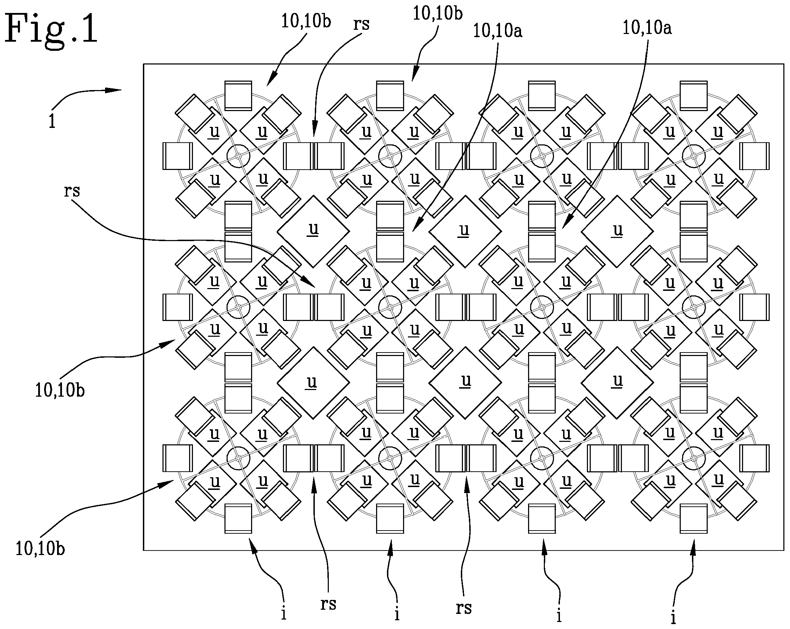

The sorting machine 1 comprises a plurality of conveyors 10, preferably identical to each other, located in the form of a matrix or chequerboard on a preferably flat movement area, as illustrated in figure 1.

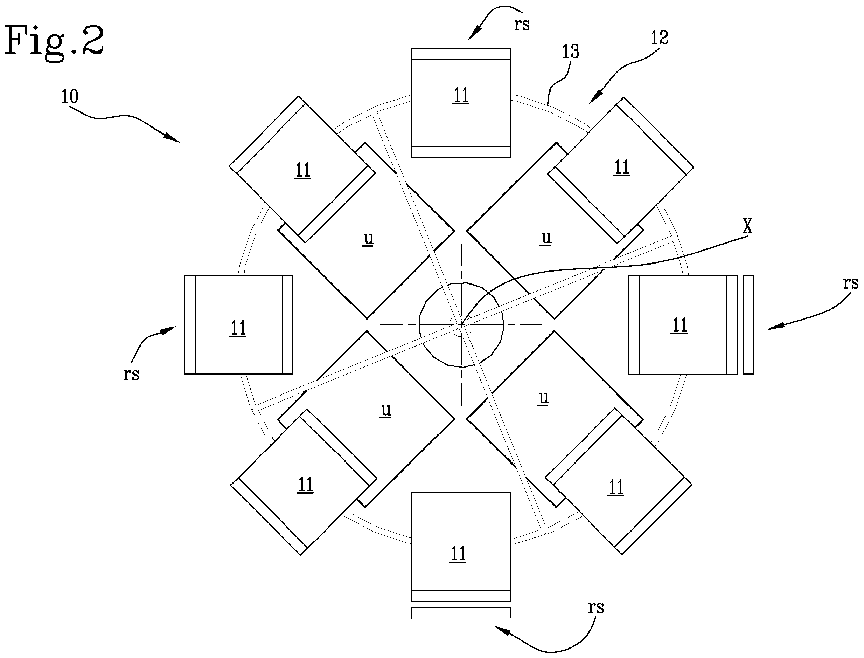

An embodiment of a single conveyor 10 forming part of the sorting machine 1 is visible in figure 2.

Preferably the sorting machine 1 has a modular structure of which the number of conveyors 10 defines the maximum sorting capacity and can be defined according to capacity needs and available space.

The sorting machine 1 is configured to receive objects from one or more infeed stations "i", preferably arranged at the perimeter of the matrix or chequerboard distribution of the conveyors 10, for example by means of the manual loading of the objects on the individual conveyors 10 by operators.

These items can include for example packages, luggage, envelopes, etc.

The sorting machine 1 is further configured to move the objects received in the infeed stations "i" to respective predetermined outfeed stations "u", preferably distributed within the matrix distribution of the conveyors 10 according to their own regular or matrix distribution.

More specifically, each conveyor 10 is configured to move at least one object, preferably a plurality of objects simultaneously, between a plurality of respective receiving/unloading stations "rs" arranged one after another along a conveying trajectory, preferably closed and circular.

The conveyors 10 are configured and/or arranged in such a way that the respective conveying trajectories lie on a same plane, preferably horizontal.

Furthermore, each conveyor 10 is positioned adjacent to at least one other conveyor 10 of the sorting machine 1 in such a way that at least one of such receiving/unloading stations "rs" is shared between the two, so that an object can be transferred between the two conveyors at said receiving/unloading station "rs".

Preferably, the conveying trajectories of two adjacent conveyors 10 are substantially tangential to each other at the shared receiving/unloading station "rs".

Preferably, each conveyor 10 has one or more movement means 11 configured for transferring an object, in movement on said conveying trajectory, from and towards an adjacent conveyor 10 at the respective shared receiving/unloading station "rs".

Preferably, the movement means 11 are configured for moving respective objects transversely, preferably radially, with respect to the conveying trajectory in the receiving/unloading station "rs".

Preferably, the same movement means 11 are movable along the conveying trajectory and configured to support respective objects during movement along the same.

According to the invention, the movement means 11 comprise conveyor belts. Each conveyor belt has at least one flat upper branch defining a support plane for a respective object.

Preferably, the conveyor belts of adjacent conveyors 10 can be positioned facing each other at a same receiving/unloading station "rs" for transferring an object between the two conveyor belts along a direction of common movement.

According to the invention, each conveyor 10 comprises a motor-driven carousel 12, rotatable about a respective axis of rotation "X".

The carousel 12 comprises a supporting ring 13 extending around the respective axis of rotation "X" and is connected to a central pin that allows it to rotate around the same.

Preferably, each carousel 12 is moved according to a continuous rotational movement, at uniform speed, and having a direction of rotation opposite to the direction of rotation of each adjacent carousel 12. In particular, this movement is achieved by means of rotary electric motors controlled by position control.

According to the invention, the conveyor belts are rigidly fixed to the supporting ring 13 to be moved by the carousel 12 about the axis of rotation "X".

In addition, the movement means 11 are connected to the supporting ring 13 so as to define respective radial directions of movement with respect to the axis of rotation "X".

Preferably, the movement means 11 of each conveyor 10 are angularly distributed in such a way as to be equally spaced around the respective axis of rotation "X, being four or eight in number, so as to define reciprocal angles of 90° or 45°.

The conveyors 10 defining the sorting machine 1 are arranged in the form of a matrix or chequerboard on the movement area so as to define one or more inner conveyors 10a and a plurality of perimeter conveyors 10b to the sorting machine 1.

Preferably, each inner conveyor 10a is adjacent to exactly four respective inner 10a or perimeter conveyors 10b and has four receiving/unloading stations "rs" shared with the adjacent conveyors 10, one for each of them. Preferably, each perimeter conveyor 10b is adjacent to two or three inner conveyors 10a or perimeter conveyors 10b and has as many reception/unloading stations "rs" shared with them.

In addition, each perimeter conveyor 10b has one or more reception/unloading stations "rs" facing an external side of the sorting machine 1 to define respective infeed stations "i" thereof.

Preferably, some of the outfeed stations "u" are defined by release stations, not shared, of one or more conveyors 10, in particular positioned within a circular extension defined by the supporting ring 13 along the trajectory of the movement means 11 so as to be accessible by the same during the movement along the conveying trajectory.

Furthermore, other outfeed stations "u" are preferably defined by intermediate stations between two or more conveyors 10, preferably distributed over the movement area according to a matrix distribution interspersed with the distribution of the conveyors 10.

In particular, these intermediate stations are alternated between respective receiving/unloading stations "rs" and shared between at least two conveyors 10, preferably between exactly four conveyors 10.

In the illustrated embodiment, the intermediate stations are arranged outside the circular extension defined by the supporting ring 13, along the trajectory of the movement means 11 so as to be accessible by the same during the movement along the conveying trajectory.

Preferably, the sorting machine 1 comprises a control unit configured to control the rotation of the individual carousels 12 so that pairs of adjacent conveyors 10 result in reciprocal counter-rotation.

Preferably, this control unit is configured to implement steps of a method for sorting objects.

In other words, the control unit determines a chequerboard distribution of the alternately clockwise and counter-clockwise rotations of the conveyors 10 so as to synchronise the arrival of the movement means 11 of adjacent conveyors 10 at the reception/unloading stations "rs".

To this end, the control unit is configured to rotate adjacent conveyors 10 at the same rotational frequency or at exactly multiple frequencies, such as double or quadruple.

Preferably, the control unit is configured to rotate the inner conveyors 10a at or below an identical rotational frequency for all the inner conveyors 10a and the perimeter conveyors 10b at a rotational frequency equal to or below that of the inner conveyors 10a so that the frequency of the inner conveyors 10a is exactly multiple the frequency of the perimeter conveyors 10b. Advantageously, this allows easier loading of objects at the infeed stations "i".

In addition, the control unit is configured for controlling and selecting the conveyors 10 of the sorting machine 1 to transfer each object between adjacent conveyors 10 so as to determine an optimised path thereof between the respective infeed station "i" and an assigned outfeed station "u".

The outfeed stations "u" are defined, for example, by a hole in the floor on which the sorting machine 1 rests or by a binder specially arranged thereon.

In particular, activating the movement means 11 that support the object to move it towards an adjacent conveyor 10 causes the selection of said adjacent conveyor 10.

Preferably, this activation is carried out without interrupting the rotation of the respective carousel 12 so that the transfer takes place during a continuous rotation of the same according to a radial direction of movement with respect to the conveying trajectory defined by the same. Preferably, the selection of the conveyors 10 is carried out in such a way as to optimise the transfer of the objects as a whole between the respective infeed "i" and outfeed stations "u" by choosing an appropriate optimised path for each object from the paths available.

In particular, the determination of the optimised path for each object is carried out by means of a particular evaluation based on the presence of other objects being conveyed which occupy the conveyors 10 and the length of the path itself.

Preferably, this control unit is further configured to detect an excessive influx of objects from the infeed stations "i" and accordingly define a method for storing some of the conveyors 10 which for a limited period of time do not transfer objects to an adjacent conveyor 10 to allow the sorting of objects in excess.

This method involves moving one or more objects repeatedly along the same conveying trajectory so as to temporarily store said object when all possible paths to the predetermined outfeed station "u" are occupied.

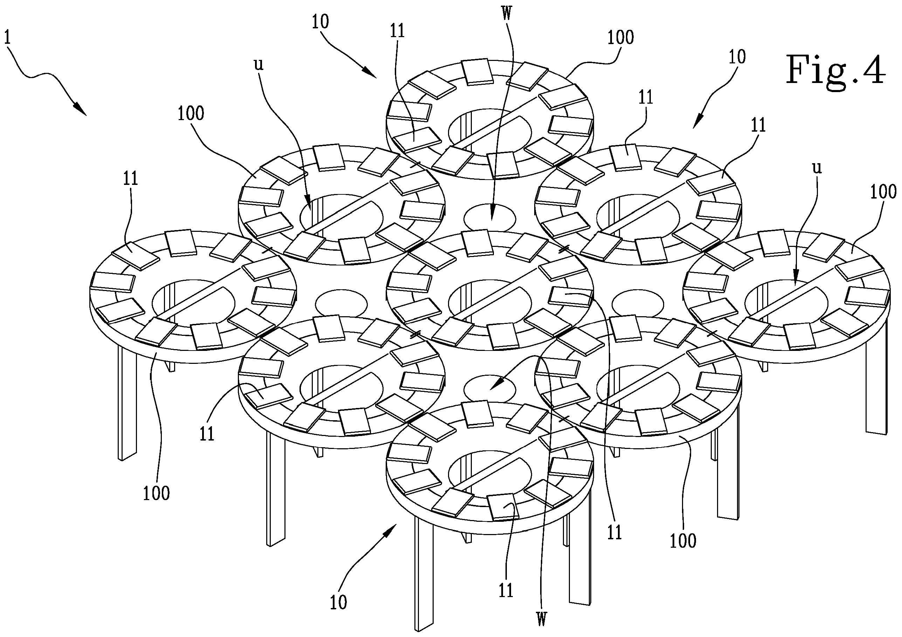

Figure 4 schematically shows a further possible embodiment of the invention that differs from that previously described in that the proposed sorting machine 1, in place of the "carousel" conveyors with a central hub, comprises conveyors 10 in a ring shape, formed by a plurality of movement means 11, which can be conveyor belts, angularly distributed on a respective rotating annular support 100, which can be individually motor-driven.

In practice, a plurality of belts, which can be constructionally realised as the so-called "cross-belts" of a classic single-carousel sorting machine of the prior art, are mounted radially on a rotatable ring 100, i.e. with a radial direction of movement relative to the centre of the ring 100.

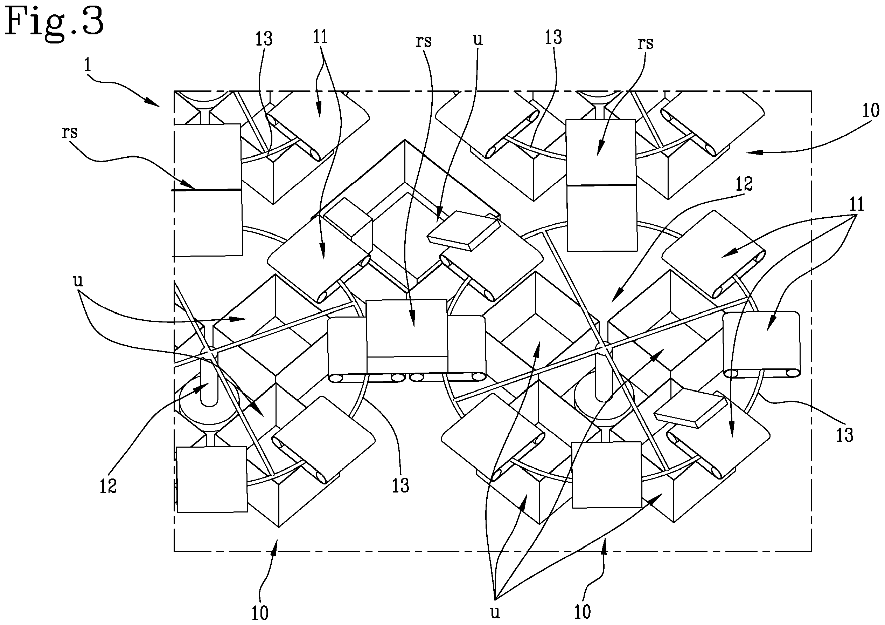

This case, as still shown in figure 4, can have an inner and central outfeed station "u" for each ring 100, provided for example with a slip funnel, and other external outfeed stations "u" positioned like those in the embodiment of figures 1 - 3; also for the external stations "u" a slip surface can be provided around the outfeed passage, shaped so as to define a depression that facilitates the steering of the objects to the same passage by gravity.

The operation of this further embodiment of the invention is like that of the first embodiment described.

The present invention reaches the proposed object, overcoming the described disadvantages of the prior art.

Advantageously, the arrangement of the conveyors in the sorting machine described allows for the rapid sorting of packages loaded at the infeed towards the outfeed stations.

In addition, the large number of planned outfeed stations significantly reduces the space occupied by the sorting machine.

The multitude of sorting machines adjacent to each other allows defining multiple trajectories between an infeed station and an outfeed station, selectable according to their respective length and any throttling already present, in order to avoid throttling and bottlenecks on single lines.

In addition, the multitude of possible trajectories allows defining short paths between the infeed and outfeed stations, minimising the time the objects stay on the sorting machine.

Finally, the modular structure of the sorting machine allows easy and rapid scalability and adaptability depending on the desired capacity and available space.

## Claims

1. A sorting machine (1) for objects configured to receive objects from one or more infeed stations (i) and move them towards respective predetermined outfeed stations (u), comprising a plurality of conveyors (10) located in the form of a matrix or chequerboard on a movement area, wherein each conveyor (10) is configured to move at least one object between a plurality of respective receiving/unloading stations (rs) arranged one after another along a conveying trajectory, said conveyors (10) being configured and/or arranged in such a way that said conveying trajectories lie on a same plane, preferably horizontal,
wherein each conveyor (10) is positioned adjacent to at least one other conveyor (10) of said plurality of conveyors (10) in such a way that at least one receiving/unloading station (rs) of a conveyor (10) is shared with a respective adjacent conveyor (10);
wherein each conveyor (10) has one or more movement means (11) configured for transferring an object, in movement on said conveying trajectory, from and towards a conveyor (10) adjacent to said at least one shared receiving/unloading station (rs); and
wherein each conveyor (10) comprises a motor-driven carousel (12) rotatable about a respective axis of rotation (X) and the movement means (11) of each conveyor (10) comprise respective conveyor belts moved by said carousel (12) about said axis of rotation (X) and defining respective radial directions of movement relative to said axis of rotation (X);
the machine (1) being **characterized in that** said carousel (12) comprises a supporting ring (13, 100) extending around the respective axis of rotation (X), said conveyor belts being rigidly mounted on said supporting ring (13, 100).

2. The sorting machine (1) according to claim 1, wherein said conveying trajectory is closed and preferably circular.

3. The sorting machine (1) according to claim 2, wherein said movement means (11) are configured for moving objects transversely to the conveying trajectory of one of said receiving/unloading stations (rs).

4. The sorting machine (1) according to claim 1, wherein each carousel (12) is moved according to a continuous rotational movement opposite to the direction of rotation of the carousel (12) of each adjacent conveyor (10).

5. The sorting machine (1) according to any one of the preceding claims, wherein each movement means (11) defines a supporting surface for a respective object.

6. The sorting machine (1) according to any one of the preceding claims, wherein the movement means (11) of each conveyor (10) are angularly distributed in such a way as to be equally spaced around the respective axis of rotation (X), being preferably four or eight in number.

7. The sorting machine (1) according to any one of the preceding claims, wherein the movement means (11) adjacent conveyors (10) can be positioned facing each other at the same receiving/unloading station (rs) for transferring an object between the two movement means (11) along a direction of common movement.

8. The sorting machine (1) according to any one of the preceding claims, wherein said plurality of movement means (11) are movable along the conveying trajectory and configured to support respective objects during the movement along the conveying trajectory and to transfer said objects towards and away from an adjacent conveyor (10).

9. The sorting machine (1) according to any one of the preceding claims, wherein said plurality of conveyors (10) arranged in the form of a matrix or chequerboard comprises one or more inner conveyors (10, 10a) and a plurality of perimeter conveyors (10, 10b), wherein said inner conveyors (10, 10a) all have the receiving/unloading stations (rs) shared with adjacent conveyors (10) and wherein some receiving/unloading stations (rs) of said perimeter conveyors (10, 10b) are not shared and define the infeed stations (I) of the sorting machine (1).

10. The sorting machine (1) according to any one of the preceding claims, wherein the outfeed stations (u) are defined by release stations, not shared, of one or more conveyors (10) and/or by intermediate stations between two or more conveyors (10), said intermediate stations being alternated between respective receiving/unloading stations (rs) and preferably shared between at least two conveyors (10).

11. The sorting machine (1) according to any one of the preceding claims, comprising a control unit configured for controlling and selecting said conveyors (10) in such a way that the conveying of the object between the infeed and outfeed stations (i, u) by means of the selected conveyors (10) determines an optimised path of the conveyor between said infeed and outfeed stations (i, u), in particular as a function of the presence of other objects being conveyed and the length of the path.

12. The sorting machine (1) according to claim 11, wherein the control unit is also configured for detecting an excessive flow of objects from the infeed stations (i) and, in the presence of said excessive flow, defining a method for storing some of the conveyors (10) wherein said conveyors (10) for a limited period of time do not transfer objects to an adjacent conveyor (10) to allow the sorting of excess objects.

13. The sorting machine (1) according to any one of the preceding claims, wherein said conveyors (10) are identical to each other and define a modular structure of said matrix or chequerboard arrangement wherein the number of conveyors (10) defines a maximum sorting capacity of the sorting machine (1).

14. A method for the sorting objects, comprising the steps of:
- preparing a sorting machine (1) according any one of the preceding claims;
- moving at least one object from a respective infeed station (i) towards a predetermined outfeed station (u) along at least some of said conveyors (10), selected in such a way that the conveying of the object between the infeed and outfeed stations (i, u) by means of the selected conveyors (10) determines an optimised path of the object between said infeed and outfeed stations (i, u), in particular as a function of other objects being conveyed and the length of the path.

15. The method according to claim 14, wherein said step of moving at least one object comprises rotating the carousels (12) of said conveyors (10) and transferring said at least one object between adjacent conveyors (10) whilst said carousels (12) rotate continuously; said carousels (12) being synchronised in rotation so as to synchronise the steps of the movement means (11) in the receiving/unloading stations (rs).

16. The method according to claim 15, wherein said step of transferring the objects between adjacent conveyor (10) comprises moving radially said objects with respect to the axis of rotation (X) of the carousels (12).

17. The method according to claim 15 or 16, wherein said conveyors (10) are arranged in a matrix configuration and said step of rotating the carousels (12) is performed in such a way as to rotate carousels (12) of adjacent conveyors (10) in reciprocal counter-rotation frequencies of rotation which are equal or multiple to each other.

18. The method according to any one claims 14 to 17, comprising a step of moving one or more objects repeatedly along the same conveying trajectory in such a way to temporarily store said object when all the possible paths towards the predetermined outfeed station (u) are occupied.

## Patentansprüche

1. Sortiermaschine (1) für Objekte oder Gegenstände, die dafür ausgelegt ist, Gegenstände von einer oder mehreren Einlaufstationen (i) zu empfangen und diese in Richtung entsprechender vorgegebener Auslaufstationen (u) zu bewegen, umfassend eine Vielzahl von Förderern (10), die matrix- oder schachbrettförmig auf einem Bewegungsbereich angeordnet sind,
wobei jeder Förderer (10) dafür ausgelegt ist, zumindest einen Gegenstand zwischen einer Vielzahl entsprechender Empfangs-/Entladestationen (rs) zu bewegen, die hintereinander entlang einer Förderbahn angeordnet sind, wobei die Förderer (10) derart konfiguriert und/oder angeordnet sind, dass die Förderbahnen auf ein und derselben, vorzugsweise horizontalen, Ebene liegen,
wobei jeder Förderer (10) derart in einer benachbarten Position zu zumindest einem anderen Förderer (10) der Vielzahl von Förderern (10) angeordnet ist, dass zumindest eine Empfangs-/Entladestation (rs) eines Förderers (10) mit einem entsprechenden benachbarten Förderer (10) gemeinsam genutzt wird;
wobei jeder Förderer (10) ein oder mehrere Bewegungsmittel (11) aufweist, die dafür konfiguriert sind, einen Gegenstand, der sich entlang der Förderbahn bewegt, weg von und hin zu einem Förderer (10) zu transferieren, der zu der zumindest einen gemeinsam genutzten Empfangs-/Entladestation (rs) benachbart ist; und
wobei jeder Förderer (10) ein motorisch angetriebenes Karussell (12) umfasst, das um eine entsprechende Drehachse (X) drehbar ist, und wobei die Bewegungsmittel (11) jedes Förderers (10) entsprechende Förderbänder umfassen, die von dem Karussell (12) um die Drehachse (X) bewegt werden und entsprechende radiale Bewegungsrichtungen relativ zu der Drehachse (X) definieren;
wobei die Maschine (1) **dadurch gekennzeichnet ist, dass** das Karussell (12) einen Trägerring (13, 100) umfasst, der sich um die entsprechende Drehachse (X) herum erstreckt, wobei die Förderbänder starr auf dem Trägerring (13, 100) montiert sind.

2. Sortiermaschine (1) nach Anspruch 1, wobei die Förderbahn geschlossen und vorzugsweise kreisförmig ist.

3. Sortiermaschine (1) nach Anspruch 2, wobei die Bewegungsmittel (11) dafür konfiguriert sind, Gegenstände in Querrichtung zu der Förderbahn einer der Empfangs-/Entladestationen (rs) zu bewegen.

4. Sortiermaschine (1) nach Anspruch 1, wobei jedes Karussell (12) in eine kontinuierliche Drehbewegung versetzt wird, die gegenläufig zu der Drehrichtung des Karussells (12) jedes benachbarten Förderers (10) ist.

5. Sortiermaschine (1) nach einem beliebigen der vorhergehenden Ansprüche, wobei jedes Bewegungsmittel (11) eine Auflagefläche für einen entsprechenden Gegenstand definiert.

6. Sortiermaschine (1) nach einem beliebigen der vorhergehenden Ansprüche, wobei die Bewegungsmittel (11) jedes Förderers (10) derart winklig verteilt sind, dass sie in gleichem Abstand voneinander um die entsprechende Drehachse (X) angeordnet sind, wobei ihre Anzahl vorzugsweise vier oder acht beträgt.

7. Sortiermaschine (1) nach einem beliebigen der vorhergehenden Ansprüche, wobei die Bewegungsmittel (11) von benachbarten Förderern (10) einander zugewandt an derselben Empfangs-/Entladestation (rs) positioniert werden können, um einen Gegenstand zwischen den zwei Bewegungsmitteln (11) entlang einer gemeinsamen Bewegungsrichtung zu transferieren.

8. Sortiermaschine (1) nach einem beliebigen der vorhergehenden Ansprüche, wobei die Vielzahl von Bewegungsmitteln (11) entlang der Förderbahn bewegbar und dafür konfiguriert sind, entsprechende Gegenstände während der Bewegung entlang der Förderbahn zu tragen und diese Gegenstände hin zu und weg von einem benachbarten Förderer (10) zu transferieren.

9. Sortiermaschine (1) nach einem beliebigen der vorhergehenden Ansprüche, wobei die Vielzahl von Förderern (10), die matrix- oder schachbrettförmig angeordnet sind, einen oder mehrere innere Förderer (10, 10a) und eine Vielzahl entlang des Umfangs angeordneter Förderer (10, 10b) umfasst, wobei alle inneren Förderer (10, 10a) die Empfangs-/Entladestationen (rs) gemeinsam mit benachbarten Förderern (10) nutzen und wobei einige Empfangs-/Entladestationen (rs) der entlang des Umfangs angeordneten Förderer (10, 10b) nicht gemeinsam genutzt werden und die Einlaufstationen (i) der Sortiermaschine (1) definieren.

10. Sortiermaschine (1) nach einem beliebigen der vorhergehenden Ansprüche, wobei die Auslaufstationen (u) durch nicht gemeinsam genutzte Ausgabestationen eines oder mehrerer Förderer (10) und/oder durch Zwischenstationen zwischen zwei oder mehreren Förderern (10) definiert sind, wobei die Zwischenstationen abwechselnd zwischen entsprechenden Empfangs-/Entladestationen (rs) angeordnet sind und vorzugsweise gemeinsam von zumindest zwei Förderern (10) genutzt werden.

11. Sortiermaschine (1) nach einem beliebigen der vorhergehenden Ansprüche, umfassend eine Steuereinheit, die dafür konfiguriert ist, die Förderer (10) derart zu steuern und auszuwählen, dass die Beförderung des Gegenstandes zwischen den Einlauf- und Auslaufstationen (i, u) durch die ausgewählten Förderer (10) einen optimierten Förderpfad zwischen den Einlauf- und Auslaufstationen (i, u) bewirkt, insbesondere in Abhängigkeit von der Anwesenheit anderer Gegenstände, die befördert werden, und von der Länge des Pfades.

12. Sortiermaschine (1) nach Anspruch 11, wobei die Steuereinheit auch dafür konfiguriert ist, einen übermäßigen Zustrom von Gegenständen von den Einlaufstationen (i) zu erkennen und, sofern ein solcher übermäßiger Zustrom vorliegen sollte, ein Speicherverfahren für einige der Förderer (10) zu definieren, in der die Förderer (10) für einen begrenzten Zeitraum keine Gegenstände auf einen benachbarten Förderer (10) transferieren, um das Sortieren der überschüssigen Gegenstände zu ermöglichen.

13. Sortiermaschine (1) nach einem beliebigen der vorhergehenden Ansprüche, wobei die Förderer (10) miteinander identisch sind und eine modulare Struktur der matrix- oder schachbrettartigen Anordnung definieren, wobei die Anzahl der Förderer (10) eine maximale Sortierkapazität der Sortiermaschine (1) definiert.

14. Verfahren zum Sortieren von Gegenständen, folgende Schritte umfassend:
- Vorbereiten einer Sortiermaschine (1) nach einem beliebigen der vorhergehenden Ansprüche;
- Bewegen von zumindest einem Gegenstand von einer entsprechenden Einlaufstation (i) zu einer vorgegebenen Auslaufstation (u) entlang zumindest einigen der Förderer (10), die derart ausgewählt sind, dass das Befördern des Gegenstandes zwischen den Einlauf- und Auslaufstationen (i, u) durch die ausgewählten Förderer (10) einen optimierten Förderpfad des Gegenstandes zwischen den Einlauf- und Auslaufstationen (i, u) bewirkt, insbesondere in Abhängigkeit von der Anwesenheit anderer Gegenstände, die befördert werden, und von der Länge des Pfades.

15. Verfahren nach Anspruch 14, wobei der Schritt des Bewegens von zumindest einem Gegenstand umfasst, die Karusselle (12) der Förderer (10) zu drehen und den zumindest einen Gegenstand zwischen benachbarten Förderern (10) zu transferieren, während die Karusselle (12) kontinuierlich drehen; wobei die Karusselle (12) in ihrer Drehbewegung synchronisiert sind, um die Schritte der Bewegungsmittel (11) in den Empfangs-/Entladestationen (rs) zu synchronisieren.

16. Verfahren nach Anspruch 15, wobei die Schritte des Transferierens der Gegenstände zwischen benachbarten Förderern (10) umfasst, die Gegenstände radial relativ zu der Drehachse (X) der Karusselle (12) zu bewegen.

17. Verfahren nach Anspruch 15 oder 16, wobei die Förderer (10) in einer matrixförmigen Konfiguration angeordnet sind und der Schritt des Drehens der Karusselle (12) derart ausgeführt wird, dass die Karusselle (12) von benachbarten Förderern (10) gegenläufig zueinander mit Drehfrequenzen gedreht werden, die gleich oder ein Vielfaches voneinander sind.

18. Verfahren nach einem beliebigen der Ansprüche von 14 bis 17, umfassend einen Schritt des wiederholten Bewegens von einem oder mehreren Gegenständen entlang derselben Förderbahn, um diesen Gegenstand vorläufig zu speichern, wenn alle möglichen Pfade, die zu der vorgegebenen Auslaufstation (u) führen, belegt sind.

## Revendications

1. Une machine de tri (1) d'objets configurée pour recevoir des objets depuis une ou plusieurs stations d'entrée (i) et les acheminer vers des stations de sortie (u) prédéfinies respectives, comprenant une pluralité de convoyeurs (10) disposés sous forme de matrice ou damier sur une zone de mouvement,
dans laquelle chaque convoyeur (10) est configuré pour déplacer au moins un objet entre une pluralité de stations de réception/déchargement (rs) respectives disposées les unes à la suite des autres le long d'une trajectoire de transport, lesdits convoyeurs (10) étant configurés et/ou disposés de manière à ce que lesdites trajectoires de transport soient situées sur un même plan, de préférence horizontal,
dans laquelle chaque convoyeur (10) est positionné adjacent à au moins un autre convoyeur (10) de ladite pluralité de convoyeurs (10) de manière à ce qu'au moins une station de réception/déchargement (rs) d'un convoyeur (10) soit partagée avec un convoyeur (10) adjacent respectif;
dans laquelle chaque convoyeur (10) a un ou plusieurs organes de mouvement (11) configurés pour transférer un objet, en mouvement sur ladite trajectoire de transport, de et vers un convoyeur (10) adjacent à ladite au moins une station de réception/déchargement (rs) partagée; et
dans laquelle chaque convoyeur (10) comprend un carrousel motorisé (12) pouvant tourner autour d'un axe de rotation (X) respectif et les organes de mouvement (11) de chaque convoyeur (10) comprennent des bandes transporteuses respectives déplacées par ledit carrousel (12) autour dudit axe de rotation (X) et définissant des directions de mouvement radiales respectives par rapport audit axe de rotation (X);
la machine (1) étant **caractérisée en ce que** ledit carrousel (12) comprend un anneau de support (13, 100) s'étendant autour de l'axe de rotation (X) respectif, lesdites bandes transporteuses étant montées de façon rigide sur ledit anneau de support (13, 100).

2. La machine de tri (1) selon la revendication 1, dans laquelle ladite trajectoire de transport est fermée et de préférence circulaire.

3. La machine de tri (1) selon la revendication 2, dans laquelle lesdits organes de mouvement (11) sont configurés pour déplacer des objets transversalement à la trajectoire de transport de l'une desdites stations de réception/déchargement (rs).

4. La machine de tri (1) selon la revendication 1, dans laquelle chaque carrousel (12) est mû selon un mouvement rotationnel continu opposé au sens de rotation du carrousel (12) de chaque convoyeur (10) adjacent.

5. La machine de tri (1) selon l'une quelconque des revendications précédentes, dans laquelle chaque organe de mouvement (11) définit une surface d'appui pour un objet respectif.

6. La machine de tri (1) selon l'une quelconque des revendications précédentes, dans laquelle les organes de mouvement (11) de chaque convoyeur (10) sont angulairement distribués de manière à être équidistants autour de l'axe de rotation (X) respectif, étant de préférence au nombre de quatre ou huit.

7. La machine de tri (1) selon l'une quelconque des revendications précédentes, dans laquelle les organes de mouvement (11) de convoyeurs (10) adjacents peuvent être positionnés face à face au niveau de la même station de réception/déchargement (rs) pour transférer un objet entre les deux organes de mouvement (11) le long d'une direction de mouvement commun.

8. La machine de tri (1) selon l'une quelconque des revendications précédentes, dans laquelle ladite pluralité d'organes de mouvement (11) sont mobiles le long de la trajectoire de transport et configurés pour supporter des objets respectifs lors du mouvement le long de la trajectoire de transport et pour transférer lesdits objets de et vers un convoyeur (10) adjacent.

9. La machine de tri (1) selon l'une quelconque des revendications précédentes, dans laquelle ladite pluralité de convoyeurs (10) disposés sous forme de matrice ou damier comprend un ou plusieurs convoyeurs internes (10, 10a) et une pluralité de convoyeurs périmétriques (10, 10b), dans laquelle lesdits convoyeurs internes (10, 10a) ont tous les stations de réception/déchargement (rs) partagées avec des convoyeurs (10) adjacents et dans laquelle certaines des stations de réception/déchargement (rs) desdits convoyeurs périmétriques (10, 1 0b) ne sont pas partagées et définissent les stations d'entrée (i) de la machine de tri (1).

10. La machine de tri (1) selon l'une quelconque des revendications précédentes, dans laquelle les stations de sortie (u) sont définies par des stations de relâche, non partagées, d'un ou plusieurs convoyeurs (10) et/ou par des stations intermédiaires entre deux ou plus convoyeurs (10), lesdites stations intermédiaires étant alternées entre des stations de réception/déchargement (rs) respectives et de préférence partagées entre au moins deux convoyeurs (10).

11. La machine de tri (1) selon l'une quelconque des revendications précédentes, comprenant une unité de contrôle configurée pour contrôler et sélectionner lesdits convoyeurs (10) de manière à ce que le transport de l'objet entre les stations d'entrée et de sortie (i, u) au moyen des convoyeurs (10) sélectionnés détermine un parcours optimisé du convoyeur entre lesdites stations d'entrée et de sortie (i, u), en particulier en fonction de la présence d'autres objets en cours de transport et de la longueur du parcours.

12. La machine de tri (1) selon la revendication 11, dans laquelle l'unité de contrôle est également configurée pour détecter un flux excessif d'objets provenant des stations d'entrée (i) et, en présence dudit flux excessif, définir une modalité de stockage de certains des convoyeurs (10) selon laquelle lesdits convoyeurs (10) pendant un intervalle de temps limité ne transfèrent pas d'objets à un convoyeur (10) adjacent pour permettre le tri d'objets en excès.

13. La machine de tri (1) selon l'une quelconque des revendications précédentes, dans laquelle lesdits convoyeurs (10) sont identiques entre eux et définissent une structure modulaire de ladite disposition en matrice ou damier où le nombre de convoyeurs (10) définit une capacité de tri maximale de la machine de tri (1).

14. Un procédé pour le tri d'objets, comprenant les étapes consistant à :
- préparer une machine de tri (1) selon l'une quelconque des revendications précédentes;
- déplacer au moins un objet d'une station d'entrée (i) respective vers une station de sortie (u) prédéfinie le long au moins de certains desdits convoyeurs (10), sélectionnés de manière à ce que le transport de l'objet entre les stations d'entrée et de sortie (i, u) au moyen des convoyeurs (10) sélectionnés détermine un parcours optimisé de l'objet entre lesdites stations d'entrée et de sortie (i, u), en particulier en fonction d'autres objets en cours de transport et de la longueur du parcours.

15. Le procédé selon la revendication 14, dans lequel ladite étape consistant à déplacer au moins un objet prévoit de faire tourner les carrousels (12) desdits convoyeurs (10) et de transférer ledit au moins un objet entre des convoyeurs (10) adjacents alors que lesdits carrousels (12) tournent en continu ; lesdits carrousels (12) étant synchronisés en rotation de manière à synchroniser les pas des organes de mouvement (11) dans les stations de réception/déchargement (rs).

16. Le procédé selon la revendication 15, dans lequel ladite étape consistant à transférer les objets entre des convoyeurs (10) adjacents prévoit de déplacer radialement lesdits objets par rapport à l'axe de rotation (X) des carrousels (12).

17. Le procédé selon la revendication 15 ou 16, dans lequel lesdits convoyeurs (10) sont disposés selon une configuration en matrice et ladite étape consistant à faire tourner les carrousels (12) est effectuée de manière à faire tourner des carrousels (12) de convoyeurs (10) adjacents en contre-rotation réciproque à des fréquences de rotation qui sont égales ou multiples entre elles.

18. Le procédé selon l'une quelconque des revendications de 14 à 17, comprenant une étape consistant à déplacer un ou plusieurs objets de façon répétée le long de la même trajectoire de transport de manière à stocker temporairement ledit objet lorsque tous les parcours possibles vers la station de sortie (u) prédéterminée sont occupés.
